# EUROPÄISCHE PATENTSCHRIFT

(11) **EP 2 928 688 B1**
(45) Veröffentlichungstag und Bekanntmachung des Hinweises auf die Patenterteilung: **28.09.2016**
(21) Anmeldenummer: 13798273.2
(22) Anmeldetag: 13.11.2013
(51) Int. Cl.: B32B 17/10

(54) **BRANDSCHUTZSCHEIBE UND BRANDSCHUTZVERGLASUNG**
FIRE PROTECTION PANE AND FLAME RETARDANT GLAZING
VITRE DE PROTECTION CONTRE L'INCENDIE ET VITRAGE DE PROTECTION CONTRE L'INCENDIE

(30) Priorität: 06.12.2012 EP 12195844
(43) Veröffentlichungstag der Anmeldung: 14.10.2015
(73) Patentinhaber: Saint-Gobain Glass France, 92400 Courbevoie (FR)
(72) Erfinder: RENIER, Anais, 50674 Köln (DE); LETOCART, Philippe, 4730 Raeren (BE); KASPER, Andreas, 52070 Aachen (DE); GELDERIE, Udo, 52146 Würselen (DE); SCHWANKHAUS, Norbert, 52499 Baesweiler (DE); BILLERT, Ulrich, 78170 La Celle Saint-Cloud (FR)
(74) Vertreter: Frei Patent Attorneys
(86) Internationale Anmeldenummer: PCT/EP2013/073700
(87) Internationale Veröffentlichungsnummer: WO 2014/086561

(56) Entgegenhaltungen:
- EP-A1- 1 398 147
- WO-A1-2006/108873
- WO-A1-2012/006748
- WO-A1-2013/026606
- WO-A1-2013/045335

## Beschreibung

Die Erfindung betrifft eine Brandschutzscheibe, insbesondere für eine Brandschutzverglasung, mit einer Schutzschicht zur Verminderung der Trübung der Scheibe bei Alterung. Des Weiteren betrifft die Erfindung ein Verfahren zur Herstellung einer solchen Brandschutzverglasung und deren Verwendung.

Brandschutzverglasungen sind in verschiedenen Ausführungsformen bekannt und werden beispielsweise im Baubereich eingesetzt. Sie bestehen in der Regel aus mindestens zwei transparenten Trägerelementen, wie zwei Glasscheiben, zwischen denen eine Brandschutzschicht aus einen transparenten, intumeszenten Material angeordnet ist. Aus der EP 0 620 781 B1 ist beispielsweise eine Brandschutzschicht aus einem wasserhaltigen Alkali-Polysilikat bekannt. Bei Einwirkung von Hitze auf die Brandschutzverglasung verdampft das in der Alkali-Polysilikatschicht enthaltende Wasser und das Alkali-Polysilikat schäumt auf. Die Transparenz der Brandschutzschicht ist dann insbesondere für Wärmestrahlung stark reduziert und schützt für eine gewisse Zeit vor unerwünschtem Wärmedurchgang. Die große Ausdehnung der Brandschutzschicht führt in der Regel zum Zersplittern einer der Glasscheiben und insbesondere zum Zersplittern der der Brandquelle zugewandten Glasscheibe. Zur Verbesserung des Hitzeschutzes und der mechanischen Stabilität, werden deshalb mehrere Glasscheiben mit dazwischenliegenden Brandschutzschichten hintereinander angeordnet.

Weitere, verbesserte Brandschutzschichten auf Basis von Alkalisilikat mit einem besonders hohen Wasseranteil von 80% bis 90 % sind beispielsweise aus EP 0 192 249 A2 bekannt.

Brandschutzscheibe und Brandverglasungen mit derartigen Brandschutzschichten zeigen oft im Laufe der Zeit punktuelle oder bereichsweise Trübungen im sichtbaren Bereich.

Die Aufgabe der vorliegenden Erfindung besteht nunmehr darin, eine Brandschutzscheibe bereitzustellen, die eine verbesserte Alterungsbeständigkeit und insbesondere eine verringerte Trübung während der Alterung aufweist. Diese und weitere Aufgaben werden nach dem Vorschlag der Erfindung durch eine Brandschutzscheibe mit den Merkmalen der unabhängigen Patentansprüche gelöst. Vorteilhafte Ausgestaltungen der Erfindung sind durch die Merkmale der Unteransprüche angegeben.

Ein Verfahren zur Herstellung einer Brandschutzverglasung sowie die Verwendung einer Brandschutzscheibe gehen aus weiteren unabhängigen Patentansprüchen hervor.

Eine erfindungsgemäße Brandschutzscheibe umfasst
- mindestens eine Floatglasscheibe mit einer Zinnbadseite,
- mindestens eine Schutzschicht, die auf der Zinnbadseite der Floatglasscheibe flächig angeordnet ist und
- mindestens eine Brandschutzschicht, die auf der Schutzschicht flächig angeordnet ist,
wobei die Schutzschicht Metalloxid, Metallnitrid, Metallsilizid und/oder Gemische oder Schichtverbindungen davon enthält.

Die vorliegende Erfindung beruht auf der Erkenntnis der Erfinder, dass je nach Glasqualität manche Floatglasscheiben, die mit ihrer Zinnbadseite in Kontakt mit der Brandschutzschicht waren, im Alterungstest eine deutliche Trübung der Durchsicht durch die Anordnung aus Floatglasscheibe und Brandschutzschicht zeigten. Dagegen zeigte sich bei Floatglasscheiben, die mit ihrer Atmosphärenseite in Kontakt mit der Brandschutzschicht angeordnet waren, im Alterungstest keine oder nur eine geringe Trübung der Durchsicht. Durch das Einbringen einer erfindungsgemäßen Schutzschicht zwischen der Zinnbadseite der Floatglasscheibe und der Brandschutzschicht konnte im Alterungstest eine Trübung der Durchsicht vermieden oder deutlich reduziert werden.

Die Erfindung kann in folgendem Modell verstanden werden: Bei der Herstellung ist die Zinnbadseite der heißen Floatglasscheibe in Kontakt mit dem Zinnbad. Dies führt zur Ausbildung einer Oberfläche, die bei Kontakt mit einer typischerweise alkalischen Brandschutzschicht je nach Morphologie der Zinnschicht inhomogen korrodiert und nach Alterung ein trübes Erscheinen bekommen kann. Die Atmosphärenseite der Floatglasscheibe zeigt bei Kontakt mit der alkalischen Brandschutzschicht nur eine geringe und homogene Korrosion, die zu keiner oder nur zu einer geringen Trübung führt. Durch Einbringen der erfindungsgemäßen Schutzschicht wird die Korrosion der Zinnbadseite bei Kontakt mit der alkalischen Brandschutzschicht verringert und homogenisiert, so dass ähnlich zur Atmosphärenseite keine oder nur eine geringe Trübung sichtbar ist.

In einer vorteilhaften Ausgestaltung der erfindungsgemäßen Brandschutzscheibe ist die Brandschutzschicht alkalisch.

Die erfindungsgemäße Brandschutzschicht enthält vorteilhafterweise Alkalisilikat und bevorzugt Alkali-Polysilikat. Derartige Brandschutzschichten sind beispielsweise aus EP 0 620 781 B1 oder EP 0 192 249 A2 bekannt. Alternative Brandschutzschichten enthalten Alkaliphosphat, Alkaliwolframat und/oder Alkalimolydat, wie aus DE 35 30 968 C2 bekannt ist.

Weitere alternative Brandschutzschichten enthalten ein Hydrogel mit einer festen Phase aus einem Polymere und bevorzugt aus Polyacrylamid oder N-Methyloacrylamid, wie aus der DE 27 13 849 C2 bekannt ist, oder polymerisiertes 2-Hydroxy-3-methacryloxypropyltrimethylammonium-chlorid, wie aus DE 40 01 677 C1 bekannt ist.

Die Dicke der Brandschutzschichten kann weit variieren und den jeweiligen Anforderungen des Verwendungszwecks angepasst werden. Vorteilhafte Brandschutzschichten weisen bei Silikaten eine Dicke h von 0,5 mm bis 7 mm und bevorzugt von 1 mm bis 6 mm auf. Bei Hydrogelen liegen die Dicken zwischen 8 mm und 70 mm.

Die Schutzschicht enthält erfindungsgemäß zumindest ein Metalloxid, ein Metallnitrid, ein Metallsilizid und/oder Gemische oder Schichtverbindungen davon. Das Metalloxid ist vorteilhafterweise nichtkristallin. Es kann bevorzugt amorph oder teilamorph (und damit teilkristallin) sein, ist aber nicht vollständig kristallin. Eine derartige nichtkristalline Schutzschicht hat den besonderen Vorteil, dass sie eine geringe Rauheit aufweist und somit eine vorteilhaft glatte Oberfläche für die oberhalb der Schutzschicht aufzubringenden Schichten bildet, wobei Kratzer und Punktdefekte aufgefüllt sind.

Die Schutzschicht kann beispielsweise zumindest ein Oxid eines oder mehrerer der Elemente Zinn, Zink, Indium, Wolfram, Silizium, Titan, Zirkonium, Hafnium, und Gallium enthalten. Alternativ kann die Schutzschicht ein Nitrid eines oder mehrerer der Elemente Zinn, Zink, Indium, Wolfram, Silizium, Titan, Zirkonium, Hafnium, und Gallium enthalten. Alternativ kann die Schutzschicht ein Silizid eines oder mehrerer der Elemente Zinn, Zink, Indium, Wolfram, Titan, Zirkonium, Hafnium, und Gallium enthalten.

In einer vorteilhaften Ausgestaltung der erfindungsgemäßen Brandschutzscheibe enthält die Schutzschicht Dotierungen, beispielsweise von Antimon, Fluor, Silber, Ruthenium, Palladium, Aluminium und Tantal. Der Anteil der Dotierung am metallischen Anteil der Schutzschicht in Gewichtsprozent (Gew.-%) beträgt bevorzugt von 0 Gew.-% bis 10 Gew.-% und besonders bevorzugt von 1 Gew.-% bis 5 Gew.-%. Brandschutzscheiben mit Schutzschichten, die eine derartige Dotierung aufweisen, zeigten besonders geringe Trübungen während der Alterung.

In einer vorteilhaften Ausgestaltung der erfindungsgemäßen Brandschutzscheibe enthält die Schutzschicht Zinnoxid, Zinkoxid oder Zinn-Metall-Mischoxid. Die Schutzschicht enthält ganz besonders bevorzugt Zinnoxid oder Zinn-Zink-Mischoxid. Brandschutzscheiben mit Schutzschichten, die Zinn enthalten, zeigten besonders geringe Trübungen während der Alterung.

In einer vorteilhaften Ausgestaltung der erfindungsgemäßen Brandschutzscheibe enthält die Schutzschicht ein Zinn-Zinkoxid mit einem Verhältnis von Zink:Zinn von 5 Gew.-% : 95 Gew.-% bis 95 Gew.-% : 5 Gew.-% und bevorzugt von 15 Gew.-% : 85 Gew.-% bis 70 Gew.-% : 30 Gew.-%. Schutzschichten aus Zinn-Zinkoxid mit derartigen Mischungsverhältnissen sind besonders beständig und zeigen besonders geringe Trübungen während der Alterung.

In einer vorteilhaften Ausgestaltung der erfindungsgemäßen Brandschutzscheibe enthält die Schutzschicht SnₓZn_{y}O_{z} mit 0 < z ≤ (y+2x) und bevorzugt 0,7*(y+2x) ≤ z ≤ (y+2x) und besonders bevorzugt 0,9*(y+2x) ≤ z ≤ (y+2x). Schutzschichten aus Zinn-Zinkoxid mit derartigen Mischungsverhältnissen sind besonders beständig und zeigen besonders geringe Trübungen während der Alterung. In einer besonders vorteilhaften Ausgestaltung der erfindungsgemäßen Brandschutzscheibe enthält die Schutzschicht ZnSnO₃ oder Zn₂SnO₄ oder Gemische davon. Schutzschichten aus Zinn-Zinkoxid mit derartigen Mischungsverhältnissen sind besonders beständig und zeigen besonders geringe Trübungen während der Alterung. In einer vorteilhaften Ausgestaltung der erfindungsgemäßen Brandschutzscheibe besteht die Schutzschicht aus Zinn-Zinkoxid sowie gegebenenfalls aus einem Dotiermetall und herstellungsbedingten Beimengungen. Schutzschichten aus Zinn-Zinkoxid mit derartigen Mischungsverhältnissen sind besonders beständig und zeigen besonders geringe Trübungen während der Alterung.

Die Abscheidung des Zinn-Zink-Mischoxids erfolgt beispielsweise unter Zugabe von Sauerstoff als Reaktionsgas während der Kathodenzerstäubung.

In einer vorteilhaften Ausgestaltung einer erfindungsgemäßen Schutzschicht beträgt die Schichtdicke d der Schutzschicht von 2 nm bis 500 nm, bevorzugt von 3 nm bis 50 nm und besonders bevorzugt von 5 nm bis 30 nm. Bei einer zweilagigen oder mehrlagigen Schutzschicht gilt dies insbesondere für die Gesamtdicke der Schutzschicht. Brandschutzscheiben mit Schutzschicht mit diesen Schichtdicken zeigten besonders geringe Trübungen während der Alterung.

In der erfindungsgemäßen Brandschutzscheibe ist die Schutzschicht als mehrlagige und bevorzugt als zweilagige Schichtverbindung wie in Anspruch 1 definiert ausgebildet. Bevorzugt ist eine Schutzschicht, die aus einer zweilagigen Schichtstruktur aus einem Metallnitrid, insbesondere Siliziumnitrid, und einem Metalloxid, insbesondere einem der oben genannten Zinn-Zink-Mischoxide oder dotierten Zinn-Zink-Mischoxide, besteht. Derartige zweilagige Schutzschichten haben sich als besonders beständig gegen alkalische Brandschutzschichten erwiesen und zeigen noch geringere Trübungen während des Alterns als einlagige Schutzschichten.

Wie Untersuchungen der Erfinder ergaben hat eine zweilagige Schutzschicht mit einer (Teil-)Schutzschicht aus einem Metallnitrid und insbesondere aus Siliziumnitrid den Vorteil, dass die zweite (Teil-)Schutzschicht aus einem Metalloxid und insbesondere aus Zinn-Zinkoxid dünner ausgebildet sein kann als bei einer einlagen Schutzschicht aus Metalloxid. Derartige zweilagige Schutzschichten sind dennoch besonders beständig gegen alkalische Brandschutzschichten und zeigen geringe Trübungen während des Alterns.

Eine erfinderische Wirkung tritt bereits auf, wenn die (Teil-)Schutzschicht aus Siliziumnitrid eine Dicke von nur wenigen Nanometern aufweist, bevorzugt von 1 nm bis 15 nm und besonders bevorzugt von 3 nm bis 10 nm.

Eine synergetische Wechselwirkung einer Siliziumnitridschicht mit der Zinn-Zinkoxidschicht ermöglicht es sogar, dass die zweite (Teil-)Schutzschicht aus Zinn-Zinkoxid derart verringert werden kann, dass die Gesamtschichtdicke der zweilagigen Schutzschicht geringer gewählt werden kann als bei einer Schutzschicht aus einer Monologe aus Zinn-Zinkoxid, bei gleichbleibend guter Beständigkeit gegen die Brandschutzschicht. Eine Verringerung der Gesamtschichtdicke der Schutzschicht kann zu einer Verbesserung der optischen Eigenschaften der Brandschutzscheibe führen, wie zu einer erhöhten Transparenz und einer geringeren Farbabweichung. Metallnitridschichten und insbesondere Siliziumnitridschichten sind prozesstechnisch sehr leicht und kostengünstig herzustellen, und haben eine hohe optische Transparenz. Insbesondere sind Siliziumnitridschichten kostengünstiger herzustellen als Zinn-Zinkoxid-Schichten.

In einer vorteilhaften Ausgestaltung ist die (Teil-)Schutzschicht aus Siliziumnitrid unmittelbar auf der Zinnbadseite der Floatglasscheibe angeordnet und die (Teil-) Schutzschicht aus Zinn-Zinkoxid auf der (Teil-)Schutzschicht aus Siliziumnitrid angeordnet. Es versteht sich, dass die Reihenfolge der Materialien auch vertauscht sein kann, so dass eine (Teil-)Schutzschicht aus Zinn-Zinkoxid unmittelbar auf der Zinnbadseite der Floatglasscheibe angeordnet ist und eine (Teil-)Schutzschicht aus Siliziumnitrid auf der (Teil-)Schutzschicht aus Zinn-Zinkoxid angeordnet ist.

Die erfindungsgemäße Floatglasscheibe ist in einem Floatverfahren hergestellt. Derartige Verfahren sind beispielsweise aus FR 1 378 839 A bekannt. Bei der Floatglasherstellung wird in einen kontinuierlichen Prozess eine teigig-flüssige Glasschmelze fortlaufend von einer Seite auf ein längliches Bad aus flüssigem Zinn geleitet. Die Glasschmelze schwimmt (engl. to float) auf dem Zinnbad und es breitet sich ein gleichmäßiger Glasfilm aus. Durch die Oberflächenspannungen des Zinns und des flüssigen Glases bildet sich eine sehr glatte Glasoberfläche. Am hinteren Ende des Zinnbades wird die Glasschmelze heruntergekühlt und erstarrt. In Rahmen der vorliegenden Erfindung wird die Seite der Floatglasscheibe, die bei der Herstellung auf dem Zinnbad aufschwimmt als Zinnbadseite bezeichnet. Die der Zinnbadseite gegenüberliegende Seite der Floatglasscheibe wird als Atmosphärenseite bezeichnet. Die Floatglasscheibe enthält oder besteht bevorzugt aus Boro-Silikatglas, Alumo-Silikatglas oder Erdalkali-Silikatglas und besonders bevorzugt aus Kalk-Natron-Glas und insbesondere Kalk-Natron-Glas gemäß der Norm EN 572-1:2004.

Die Floatglasscheibe ist vorteilhafterweise thermisch vorgespannt oder teilvorgespannt. Die thermisch teilvorgespannte oder vorgespannte Floatglasscheibe hat bevorzugt eine Vorspannung von 30 MPa bis 200 MPa und besonders bevorzugt von 70 MPa bis 200 MPa. Derartige vorgespannte oder teilvorgespannte Floatglasscheiben sind beispielsweise aus DE 197 10 289 C1 bekannt. Thermisch vorgespannte oder teilvorgespannte Floatglasscheiben sind auf Grund ihrer höheren Stabilität für Brandschutzscheiben besonders geeignet und die erfindungsgemäße Wirkung der Schutzschicht ist besonders vorteilhaft.

Die Dicke der Floatglasscheibe kann breit variieren und so hervorragend den Erfordernissen des Einzelfalls angepasst werden. Vorzugsweise werden Scheiben mit den Standardstärken von 1 mm bis 25 mm und bevorzugt von 2 mm bis 12 mm verwendet. Die Größe der Scheibe kann breit variieren und richtet sich nach der Größe der erfindungsgemäßen Verwendung.

Die Floatglasscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt ist die Scheibe planar oder leicht oder stark in eine Richtung oder in mehrere Richtungen des Raumes gebogen. Die Floatglasscheibe kann farblos oder gefärbt sein.

Die erfindungsgemäße Floatglasscheibe kann aus einem Verbund von zwei oder mehreren einzelnen Floatglasscheiben bestehen, die jeweils über mindestens eine Zwischenschicht miteinander verbunden sind. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

In einer vorteilhaften Ausgestaltung der erfindungsgemäßen Brandschutzscheibe ist zwischen der Schutzschicht und der Brandschutzschicht mindestens eine Haftverbesserungsschicht oder eine Haftverminderungsschicht angeordnet ist. Die Haftverbesserungsschicht enthält beispielsweise organisch hydrophile Substanzen auf der Basis von Silanen, Titanaten oder Zirkonaten und ist beispielsweise aus EP 0 001 531 B1 und EP 0 590 978 A1 bekannt. Haftverminderungsschichten enthalten beispielsweise hydrophobe organofunktionelle Silane wie Fluoralkylsilane, Perfluoralkylsilane, Fluoralkyltrichlorsilane, Fluoralkylalkoxysilane, Perfluoralkylalkoxysilane, Fluoraliphatische Silylether, Alkylsilane und Phenylsilane und Silikone. Derartige hydrophobe organofunktionelle Silane sind beispielsweises aus DE 197 31 416 C1 bekannt. Alternative Haftverminderungsschichten enthalten Polymer-Wachse, bevorzugt auf der Basis von Polyethylen.

In einer vorteilhaften Ausgestaltung einer erfindungsgemäßen Brandschutzscheibe ist zwischen der Zinnbadseite der Floatglasscheibe und der Schutzschicht mindestens eine weitere Schicht angeordnet, die beispielsweise die optischen Eigenschaften der Brandschutzscheibe beeinflusst. Eine derartige weitere Schicht erhöht beispielsweise die Transmission durch die Brandschutzscheibe, mindert Reflektionen oder gibt dem transmittierten Licht eine Färbung.

Die Schutzschicht ist vorteilhafterweise für elektromagnetische Strahlung, vorzugsweise elektromagnetische Strahlung einer Wellenlänge von 300 nm bis 1.300 nm, und insbesondere für sichtbares Licht, durchlässig. "Durchlässig" bedeutet, dass die Gesamttransmission durch die mit der Schutzschicht beschichtete Floatglasscheibe eine Transmission von mehr als 50 %, bevorzugt von mehr als 70 % und besonders bevorzugt von mehr als 90 % aufweist.

Die Erfindung umfasst des Weiteren eine Brandschutzverglasung, die mindestens
- eine erfindungsgemäße Brandschutzscheibe und
- eine zweite Floatglasscheibe mit einer Atmosphärenseite und einer Zinnbadseite umfasst,
wobei die zweite Floatglasscheibe über ihre Atmosphärenseite mit der Brandschutzschicht der Brandschutzscheibe flächig verbunden ist
Eine alternative Ausgestaltung einer erfindungsgemäßen Brandschutzverglasung umfasst mindestens
- eine erfindungsgemäße Brandschutzscheibe und
- eine zweite Floatglasscheibe mit einer Atmosphärenseite und einer Zinnbadseite,
wobei die zweite Floatglasscheibe auf der Zinnbadseite eine zweite, erfindungsgemäße Schutzschicht aufweist und die zweite Floatglasscheibe über die zweite Schutzschicht mit der Brandschutzschicht der Brandschutzscheibe flächig verbunden ist.

In einer vorteilhaften Weiterbildung der erfindungsgemäßen Brandschutzverglasung ist die Atmosphärenseite der Floatglasscheibe der Brandschutzscheibe flächig mit einer zweiten Brandschutzschicht verbunden und die zweite Brandschutzschicht ist mit der Atmosphärenseite einer dritten Floatglasscheibe flächig verbunden.

In einer alternativen Weiterbildung der erfindungsgemäßen Brandschutzverglasung ist die Atmosphärenseite der Floatglasscheibe der Brandschutzscheibe flächig mit einer zweiten Brandschutzschicht verbunden und die zweite Brandschutzschicht ist über eine weitere Schutzschicht mit der Zinnbadseite einer dritten Floatglasscheibe.

Derartige Dreifachverglasungen zeigen eine besonders hohe Stabilität und Brandschutzwirkung. Es versteht sich, dass nach ähnlichem Prinzip auch Brandschutzscheiben mit vier oder mehr Floatglasscheiben herstellbar sind, wobei zur erfindungsgemäßen Vermeidung der Trübung der Durchsicht bei Alterung zwischen jeder Brandschutzschicht und der unmittelbar benachbart angeordneten Zinnbadseite einer Floatglasscheibe eine erfindungsgemäße Schutzschicht angeordnet ist. Unmittelbar benachbart angeordnet bedeutet hier, dass zwischen der Zinnbadseite und der Brandschutzschicht keine Glasscheibe vorhanden ist.

Die Erfindung umfasst des Weiteren eine Brandschutzverglasung aus einer Stapelfolge von einer ersten Floatglasscheibe, einer ersten Brandschutzschicht, einer zweiten Floatglasscheibe, einer zweiten Brandschutzschicht und einer abschließenden Floatglasscheibe, wobei zwischen jeder Zinnbadseite und einer unmittelbar benachbart angeordneten Brandschutzschicht, eine erfindungsgemäße Schutzschicht angeordnet ist.

In einer Weiterbildung dieser erfindungsgemäßen Brandschutzverglasung sind mindestens eine weitere Floatglasscheibe und eine weitere Brandschutzschicht innerhalb der Stapelfolge angeordnet. Es versteht sich, dass zwischen jeder Zinnbadseite einer weiteren Floatglasscheibe und einer unmittelbar benachbart angeordneten Brandschutzschicht, eine weitere erfindungsgemäße Schutzschicht angeordnet ist.

Zum Schutz der Brandschutzverglasung und insbesondere der Brandschutzschicht vor Wärme und UV-Strahlung können die Brandschutzverglasung und insbesondere die außenliegende Floatglasscheibe zusätzliche funktionelle Beschichtungen mit UV- und/oder Infrarot-reflektierender Wirkung aufweisen. Des Weiteren können mehrere Brandschutzverglasungen durch evakuierte oder gasgefüllte Zwischenräume eine Isolierverglasung bilden.

Die Erfindung umfasst ein Verfahren zur Herstellung einer Brandschutzverglasung, wobei mindestens:
a. eine Schutzschicht auf der Zinnbadseite einer ersten Floatglasscheibe aufgebracht wird,
b. die erste Floatglasscheibe und eine zweite Floatglasscheibe auf einen festen Abstand gehalten werden, so dass sich ein Formhohlraum zwischen der Zinnbadseite der ersten Floatglasscheibe und der zweiten Floatglasscheibe ausbildet und
c. eine Brandschutzschicht in flüssiger Form in den Formhohlraum eingegossen und ausgehärtet wird.

In einer vorteilhaften Ausführungsform des erfindungsgemäßen Verfahrens werden die Verfahrensschritte derart wiederholt, dass eine dritte Floatglasscheibe auf einem festen Abstand zu der ersten oder zweiten Floatglasscheibe gehalten wird und der dadurch gebildete Formhohlraum mit einer zweiten Brandschutzschicht gefüllt wird. Dieser Verfahrensschritt kann auch parallel erfolgen, das heißt, dass drei oder mehr Floatglasscheiben gleichzeitig auf einem Abstand gehalten werden und die Brandschutzschichten durch gleichzeitiges Eingießen der wässrigen Lösung des Silikates oder des Hydrogels gebildet werden. Es versteht sich, dass das Verfahren zur Ausbildung von Mehrscheiben-Brandverglasungen mit vier oder mehr Floatglasscheiben entsprechend wiederholt durchgeführt werden kann.

Das Aufbringen der Schutzschicht in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der Floatglasscheibe.

Ein Verfahren zur Herstellung von Zinn-Zink-Mischoxid-Schichten durch reaktive Kathodenzerstäubung ist beispielsweise aus DE 198 48 751 C1 bekannt. Das Zinn-Zink-Mischoxid wird bevorzugt mit einem Target abgeschieden, welches von 5 Gew.-% bis 95 Gew.-% Zink, von 5 Gew.-% bis 95 Gew.-% Zinn und von 0 Gew.-% bis 10 Gew.-% Antimon sowie herstellungsbedingte Beimengungen enthält. Das Target enthält besonders bevorzugt von 15 Gew.-% bis 70 Gew.-% Zink, von 30 Gew.-% bis 85 Gew.-% Zinn und von 0 Gew.-% bis 5 Gew.-% Antimon sowie herstellungsbedingte Beimengungen anderer Metalle. Die Abscheidung des Zinn-Zink-Mischoxids erfolgt beispielsweise unter Zugabe von Sauerstoff als Reaktionsgas während der Kathodenzerstäubung.

Die Schutzschicht kann alternativ durch Aufdampfen, chemische Gasphasenabscheidung (chemical vapour deposition, CVD), plasmagestützte Gasphasenabscheidung (PECVD), durch Sol-Gel-Verfahren oder durch nasschemische Verfahren aufgebracht werden.

In Verfahrensschritt (b) werden die erste Floatglasscheibe und eine zweite Floatglasscheibe auf einem festen Abstand gehalten, so dass sich ein Formhohlraum ausbildet. Dies kann beispielsweise durch Abstandshalter, die bevorzugt im Randbereich der Floatglasscheiben angeordnet werden, erfolgen. Die Abstandshalter können dabei als fester Bestandteil in der Brandschutzverglasung verbleiben oder wieder entfernt werden. Alternativ können die Floatglasscheiben durch äußere Halter in der Position fixiert werden.

In Verfahrensschritt (c) wird eine gießfähige Lösung der Brandschutzschicht in den Formhohlraum eingegossen und zu einer Brandschutzschicht ausgehärtet. Im Falle einer Brandschutzschicht aus einem wasserhaltigen Alkali-Polysilikates wird beispielsweise ein Alkalisilikat mit einem Härter, welcher Siliziumdioxid enthält oder freisetzt, zusammengefügt. Die daraus gebildete gießfähige Masse wird in den Formhohlraum gegossen. Dort härtet die Masse unter Erhaltung des Wassergehalts zu einer festen Polysilikatschicht aus. Verfahren zur Herstellung einer Brandschutzschicht aus einem Hydrogel sind beispielsweise aus der WO 94/04355 oder der DE 40 01 677 C1 bekannt.

In einer vorteilhaften Weiterbildung des erfindungsgemäßen Verfahrens werden vor dem Verfahrensschritt (a) oder zwischen den Verfahrensschritten (a) und (b) die erste Floatglasscheibe und/oder die erste Floatglasscheibe sowie die zweite Floatglasscheibe thermisch vorgespannt oder teilvorgespannt.

Die Erfindung umfasst weiterhin die Verwendung einer erfindungsgemäßen Schutzschicht zwischen der Zinnbadseite einer Floatglasscheibe und einer Brandschutzschicht, insbesondere einer alkalischen Brandschutzschicht, zur Verminderung der Trübung der Floatglasscheibe bei Alterung.

Des Weiteren umfasst die Erfindung die Verwendung einer Brandschutzscheibe als Bauelement, als Raumteiler, als Teil einer Außenfassade oder eines Fensters in einem Gebäude oder in einem Fahrzeug zu Lande, zu Wasser oder in der Luft oder als Einbauteil in Möbeln und Geräten.

Die Erfindung wird nachfolgend anhand einer Zeichnung und eines Beispiels näher erläutert. Die Zeichnung ist nicht vollständig maßstabsgetreu. Die Erfindung wird durch die Zeichnung in keiner Weise eingeschränkt. Es zeigen:
Figur 1 eine schematische Querschnittsdarstellung einer erfindungsgemäßen Brandschutzscheibe,
Figur 2A eine schematische Querschnittsdarstellung einer erfindungsgemäßen Brandschutzverglasung,
Figur 2B eine schematische Querschnittsdarstellung eines alternativen Ausführungsbeispiels einer erfindungsgemäßen Brandschutzverglasung,
Figur 3 eine schematische Querschnittsdarstellung eines alternativen Ausführungsbeispiels einer erfindungsgemäßen Brandschutzverglasung,
Figur 4A eine schematische Querschnittsdarstellung eines alternativen Ausführungsbeispiels einer erfindungsgemäßen Brandschutzverglasung,
Figur 4B eine schematische Querschnittsdarstellung eines alternativen Ausführungsbeispiels einer erfindungsgemäßen Brandschutzverglasung,
Figur 5 ein Flussdiagramm eines Ausführungsbeispiels des erfindungsgemäßen Verfahrens,
Figur 6 ein Diagramm der Trübung der erfindungsgemäßen Brandschutzscheibe im Vergleich zum Stand der Technik,
Figur 7 eine schematische Querschnittsdarstellung eines weiteren alternativen Ausführungsbeispiel einer erfindungsgemäßen Brandschutzscheibe und
Figur 8 eine schematische Querschnittsdarstellung eines weiteren alternativen Ausführungsbeispiels einer erfindungsgemäßen Brandschutzverglasung.

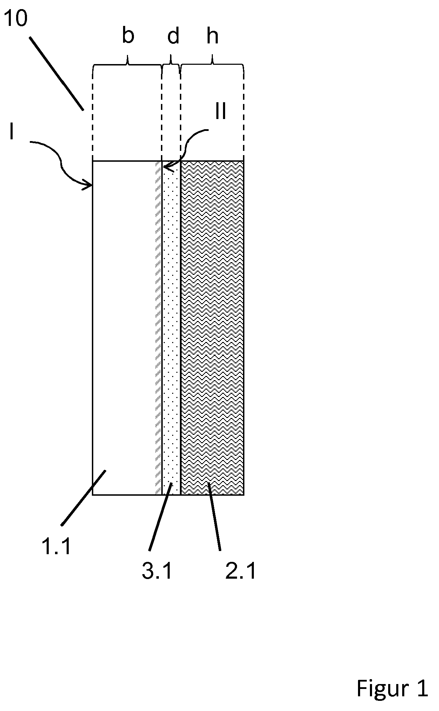

Figur 1 zeigt eine schematische Darstellung einer erfindungsgemäßen Brandschutzscheibe 10 in einem Querschnitt. Die Brandschutzscheibe 10 umfasst eine Floatglasscheibe 1.1 mit einer Atmosphärenseite I und einer Zinnbadseite II. Die Floatglasscheibe 1.1 hat beispielsweise eine Dicke b von 5 mm und Abmessungen von 2 m x 3 m. Es versteht sich, dass die Floatglasscheibe 1.1 auch andere, an den jeweiligen Verwendungszweck angepasste Dicken und Abmessungen haben kann.

Auf der Zinnbadseite II der Floatglasscheibe 1.1 ist flächig eine Schutzschicht 3.1 angeordnet. Auf der Schutzschicht 3.1 ist eine Brandschutzschicht 3.1 aus einem alkalischen Polysilikat angeordnet. Die Schutzschicht 3.1 erstreckt sich teilweise und bevorzugt im Wesentlichen vollständig über die gesamte Zinnbadseite II der Floatglasscheibe 1.1. Die Schutzschicht 3.1 erstreckt sich insbesondere über die vollständige Fläche zwischen der Brandschutzschicht 2.1 und der Floatglasscheibe 1.1. Dadurch kann sichergestellt werden, dass die Oberfläche der Zinnbadseite II der Floatglasscheibe 1.1 vor dem alkalischen Polysilikat der Brandschutzschicht 2.1 geschützt ist.

Die Schutzschicht 3.1 enthält beispielsweise antimondotiertes Zinn-Zinkoxid und wurde durch Kathodenzerstäubung abgeschieden. Das Target zur Abscheidung der Schutzschicht 3.1 enthielt 30 Gew.-% Zink, 68 Gew.-% Zinn und 2 Gew.-% Antimon. Die Abscheidung erfolgte unter Zugabe von Sauerstoff als Reaktionsgas während der Kathodenzerstäubung. Die Dicke d der Schutzschicht 3.1 beträgt beispielsweise 25 nm.

Die Brandschutzschicht 2.1 enthält beispielsweise ein ausgehärtetes Polysilikat, welches aus einem Alkalisilikat und mindestens einem Härter gebildet wird, beispielsweise aus Kaliumsilikat und kolloidaler Kieselsäure. In einer alternativen Ausgestaltung kann das Kaliumsilikat auch direkt aus Kalilauge und Siliziumdioxid hergestellt werden. Im Polysilikat beträgt das Molverhältnis von Siliziumdioxid und Kaliumoxid (SiO₂:K₂O) beispielsweise 4,7:1. Eine derartige Brandschutzschicht 2.1 ist typischerweise alkalisch mit einem pH-Wert von 12. Die Dicke h der Brandschutzschicht 2.1 beträgt beispielsweise 3 mm.

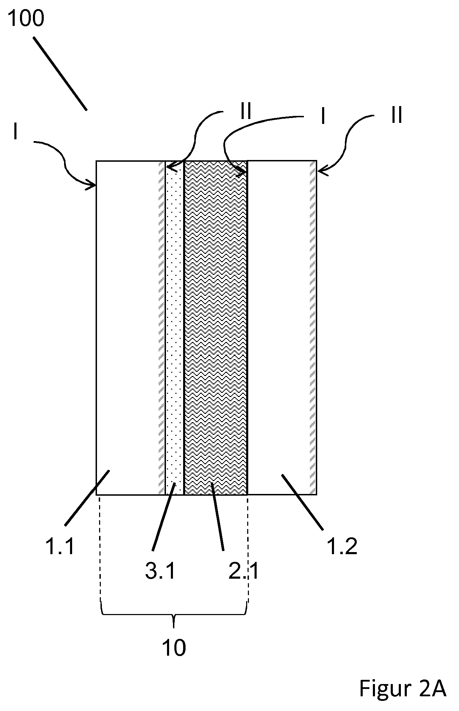

Figur 2A zeigt eine schematische Querschnittsdarstellung einer erfindungsgemäßen Brandschutzverglasung 100. Die erfindungsgemäße Brandschutzverglasung 100 umfasst beispielsweise eine erfindungsgemäße Brandschutzscheibe 10, wie sie in Figur 1 beschrieben ist. Des Weiteren ist die Brandschutzschicht 2.1 der Brandschutzscheibe 10 auf der der Schutzschicht 3.1 gegenüberliegenden Seite mit der Atmosphärenseite I einer zweiten Floatglasscheibe 1.2 flächig verbunden. Die zweite Floatglasscheibe 1.2 entspricht in ihrer Beschaffenheit beispielsweise der Floatglasscheibe 1.1.

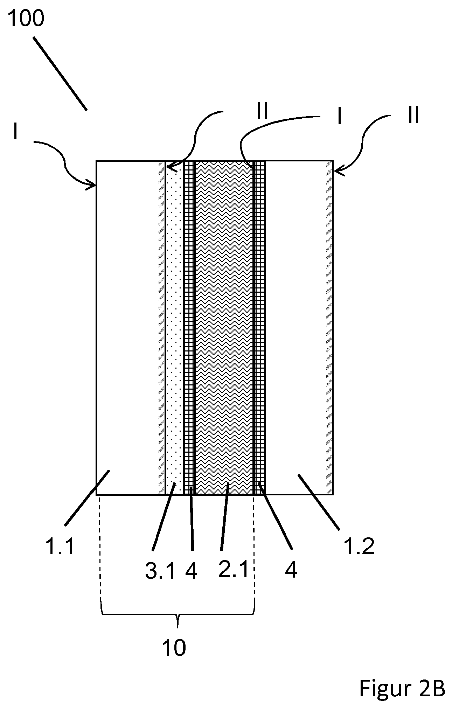

Figur 2B zeigt eine schematische Querschnittsdarstellung eines alternativen Ausführungsbeispiels einer erfindungsgemäßen Brandschutzverglasung 100. Die erfindungsgemäße Brandschutzverglasung 100 entspricht derjenigen aus Figur 2A. Zur Verbesserung der Eigenschaften im Brandfalle ist zwischen der Schutzschicht 3.1 und der Brandschutzschicht 2.1 sowie zwischen der Brandschutzschicht 2.1 und der zweiten Floatglasscheibe 1.2 eine Haftverminderungsschicht 4 angeordnet. Die Haftverminderungsschicht 4 enthält beispielsweise ein organofunktionelles Silan mit hydrophober Wirkung. Die Haftverminderungsschicht 4 hat den besonderen Vorteil, dass sich im Brandfall beim Zerbrechen der Floatglasscheibe 1.1,1.2 die einzelnen Bruchstücke von der Brandschutzschicht 3.1 lösen können, ohne dass der Zusammenhang der Brandschutzschicht 3.1 verloren geht.

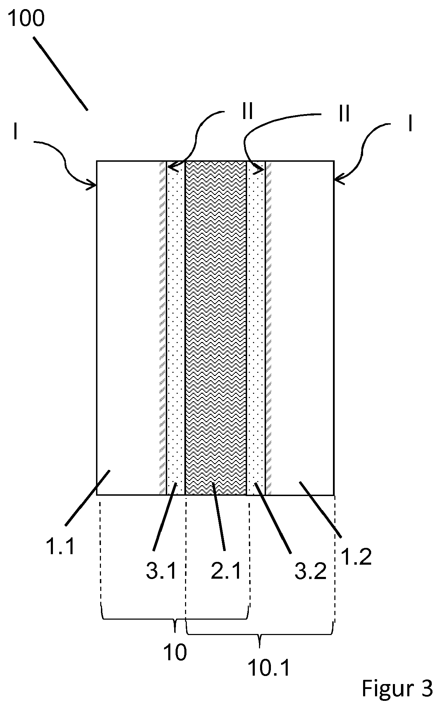

Figur 3 zeigt eine schematische Querschnittsdarstellung eines alternativen Ausführungsbeispiels einer erfindungsgemäßen Brandschutzverglasung 100. Die erfindungsgemäße Brandschutzverglasung 100 umfasst beispielsweise eine erfindungsgemäße Brandschutzscheibe 10, wie sie in Figur 1 beschrieben ist. Des Weiteren ist die Brandschutzschicht 2.1 der Brandschutzscheibe 10 auf der der Schutzschicht 3.1 gegenüberliegenden Seite über eine zweite Schutzschicht 3.2 mit der Zinnbadseite II einer zweiten Floatglasscheibe 1.2 flächig verbunden. Die zweite Floatglasscheibe 1.2 und die zweite Schutzschicht 3.2 bilden mit der Brandschutzschicht 2.1 wiederum eine erfindungsgemäße Brandschutzscheibe 10.1. Da sowohl die Zinnbadseite II der Floatglasscheibe 1.1 als auch die Zinnbadseite II der zweiten Floatglasscheibe 1.2 durch eine Schutzschicht 3.1,3.2 von der Brandschutzschicht 2.1 getrennt sind, wird erfindungsgemäß eine Trübung der Durchsicht durch die Brandschutzverglasung 100 bei Alterung vermieden.

Eine derartige Brandschutzverglasung 100 ist für eine eigenständige Verwendung als Bauelement in einem Gebäude oder als Fahrzeugverglasung geeignet.

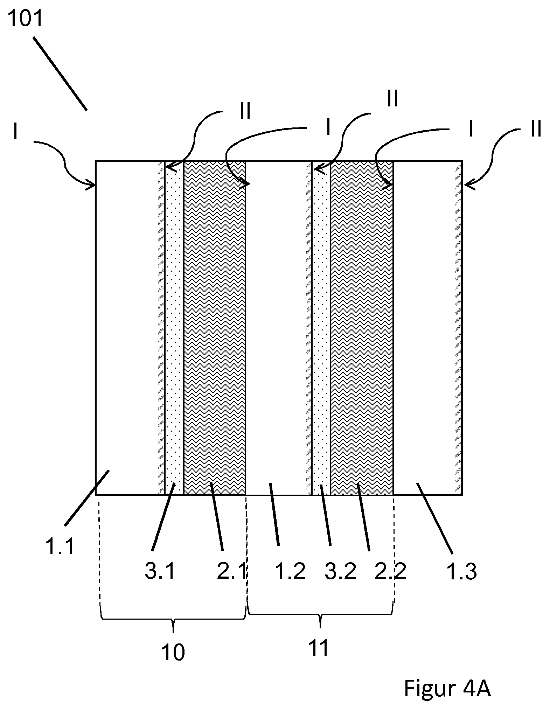

Figur 4A zeigt eine schematische Querschnittsdarstellung eines alternativen Ausführungsbeispiels einer erfindungsgemäßen Brandschutzverglasung 101, am Beispiel einer Dreifachverglasung mit drei Floatglasscheiben 1.1,1.2,1.3 und zwei Brandschutzschichten 2.1,2.2. Die erfindungsgemäße Brandschutzverglasung 101 umfasst beispielsweise eine erfindungsgemäße Brandschutzscheibe 10, wie sie in Figur 1 beschrieben ist. Des Weiteren ist die Brandschutzschicht 2.1 der Brandschutzscheibe 10 auf der der Schutzschicht 3.1 gegenüberliegenden Seite mit der Atmosphärenseite I einer zweiten Floatglasscheibe 1.2 flächig verbunden. Die zweite Floatglasscheibe 1.2 weist an ihrer Zinnbadseite II eine zweite Schutzschicht 3.2 auf und ist über diese mit einer zweiten Brandschutzschicht 2.2 verbunden. Die zweite Floatglasscheibe 1.2, die Schutzschicht 3.2 und die Brandschutzschicht 2.2 bilden wiederum eine erfindungsgemäße Brandschutzscheibe 11. Die der zweiten Schutzschicht 3.2 abgewandten Seite der zweiten Brandschutzschicht 2.2 ist mit der Atmosphärenseite I einer dritten Floatglasscheibe 1.3 verbunden.

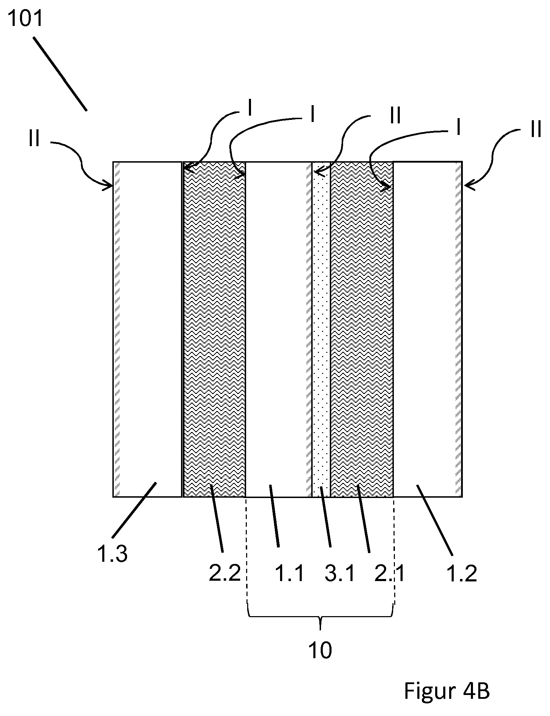

Figur 4B zeigt ein alternatives Ausführungsbeispiel einer erfindungsgemäßen Brandschutzverglasung 101. Die Brandschutzschicht 2.1 einer erfindungsgemäßen Brandschutzscheibe 10 ist mit der Atmosphärenseite I einer zweiten Floatglasscheibe 1.2 flächig verbunden. Des Weiteren ist die Atmosphärenseite I der Floatglasscheibe 1.1 mit einer zweiten Brandschutzschicht 2.2 flächig verbunden. Die zweite Brandschutzschicht 2.2 ist flächig mit der Atmosphärenseite I einer dritten Floatglasscheibe 1.3 flächig verbunden. Dieses Ausführungsbeispiel hat den besonderen Vorteil, dass nur eine erfindungsgemäße Schutzschicht 3.1 benötigt wird um eine alterungsbeständige Brandschutzverglasung 101 herzustellen, da durch eine geeignete Anordnung der außenliegenden Floatglasscheiben 1.2,1.3 nur die Zinnbadseite II der Floatglasscheibe 1.1 unmittelbar benachbart und ohne Trennung durch Glas zu einer Brandschutzschicht 2.1 angeordnet ist.

Die in den Figuren 4A und 4B dargestellten Dreifachverglasungen zeigen eine besonders hohe Stabilität und Brandschutzwirkung. Es versteht sich, dass nach ähnlichem Prinzip auch Brandschutzscheiben mit vier oder mehr Floatglasscheiben herstellbar sind, wobei zur erfindungsgemäßen Vermeidung der Trübung der Durchsicht bei Alterung zwischen jeder Brandschutzschicht und der unmittelbar benachbart angeordneten Zinnbadseite einer Floatglasscheibe eine erfindungsgemäße Schutzschicht angeordnet ist.

Die Brandschutzscheibe 10,11 und die Brandschutzverglasung 100,101 aus den hier dargestellten Ausführungsbeispielen können weitere, an sich bekannte und hier nicht dargestellte Abstandshalter zwischen den benachbarten Floatglasscheiben 1.1,1.2,1.3 und Randversiegelungen um die Brandschutzschichten 2.1,2.2 enthalten. Geeignete Materialien für die Randversiegelung enthalten beispielsweise Polyisobuthylen als Abstandhalter und Polysulfid, Polyurethan oder Silikon als Randverklebung

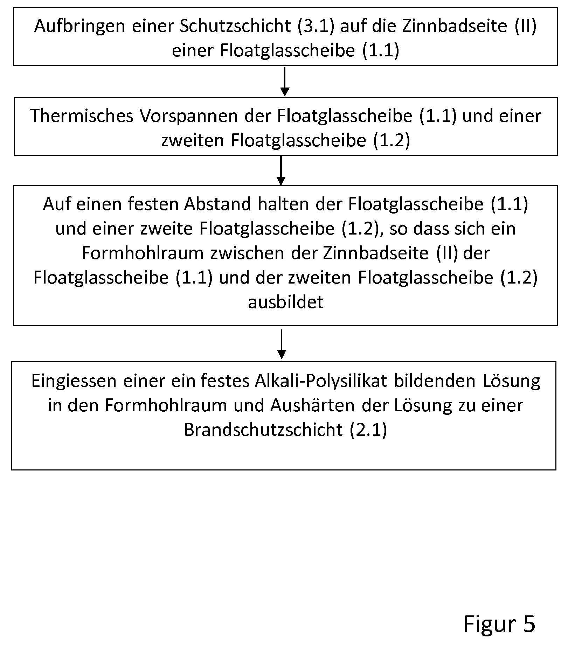

Figur 5 zeigt ein Flussdiagramm eines Ausführungsbeispiels des erfindungsgemäßen Verfahrens zur Herstellung einer erfindungsgemäßen Brandschutzverglasung 100 nach Figur 2.

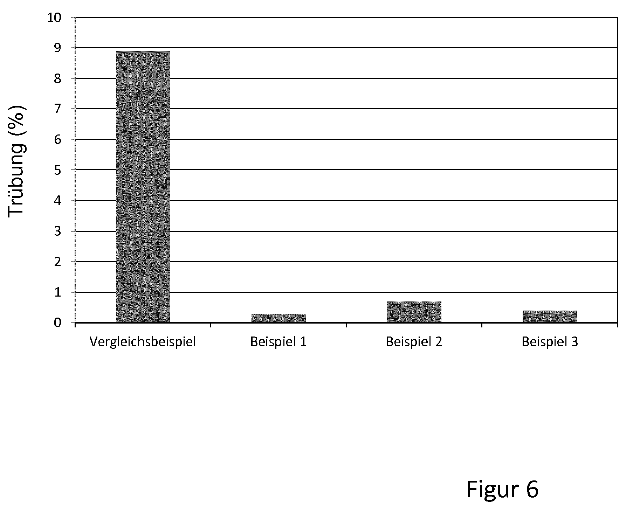

Figur 6 zeigt ein Diagramm der Trübung in einem Alterungstest von erfindungsgemäßen Brandschutzscheiben 10 im Vergleich zu einer Brandschutzscheibe nach dem Stand der Technik als Vergleichsbeispiel. Im beschleunigten Alterungstest wurde die jeweilige Floatglasscheibe über eine Zeitdauer von 4 Stunden und bei einer Temperatur von 80°C in eine wässrige Lösung aus Kaliumsilikat getaucht. Die wässrige Kaliumsilikat-Lösung ist der alkalische Anteil bei der Herstellung einer erfindungsgemäßen Brandschutzschicht aus einem Alkali-Polysilikat-Hydrogel. Die Trübung wurde mit einem Trübungsmessgerät vom Typ "haze-gard plus" der Firma BYK-Gardner gemessen.

Beispiel 1 ist eine erfindungsgemäße Floatglasscheibe, deren Zinnbadseite II mit einer Schutzschicht aus Zinn-Zinkoxid beschichtet wurde. Dabei betrug das Verhältnis von Zinn zu Zink gleich 50 Gew.-%:50 Gew.-%. Die Dicke d der Schutzschicht betrug 25 nm. Nach dem Alterungstest wurde eine Trübung von 0,3 % gemessen.

Beispiel 2 ist eine erfindungsgemäße Floatglasscheibe, deren Zinnbadseite II mit einer Schutzschicht aus Zinkoxid beschichtet war. Die Dicke d der Schutzschicht betrug 25 nm. Nach dem Alterungstest wurde eine Trübung von 0,7 % gemessen.

Beispiel 3 ist eine erfindungsgemäße Floatglasscheibe, deren Zinnbadseite II mit einer Schutzschicht aus Indium-Zinnoxid (ITO) beschichtet war. Dabei betrug das Verhältnis von Indium zu Zinn gleich 90 Gew.-%:10 Gew.-%. Die Dicke d der Schutzschicht betrug 25 nm. Nach dem Alterungstest wurde eine Trübung von 0,4 % gemessen.

Das Vergleichsbeispiel nach dem Stand der Technik war eine Floatglasscheibe, bei der weder Atmosphärenseite I noch Zinnbadseite II beschichtet wurden und somit beide Seiten der wässrigen Lösung aus Kaliumsilikat ausgesetzt waren. Nach dem Alterungstest wurde beim Vergleichsbeispiel eine Trübung von 8,9 % gemessen.

Bei den dargestellten Alterungstests waren die Atmosphärenseiten I der Floatglasscheiben der Beispiele 1 bis 3 und des Vergleichsbeispiels nicht durch eine erfindungsgemäße Schutzschicht geschützt und somit der wässrigen Lösung aus Kaliumsilikat unmittelbar ausgesetzt. Daraus lässt sich folgern, dass die Trübung im Wesentlichen durch den Kontakt der Zinnbadseite II mit der wässrigen Lösung aus Kaliumsilikat bewirkt wird.

Jede der erfindungsgemäßen Schutzschichten aus den Beispielen 1 bis 3 vermindert die Trübung der Floatglasscheibe im Vergleich zum Vergleichsbeispiel nach dem Stand der Technik ohne erfindungsgemäße Schutzschicht 3 auf Werte < 1%. Bei der erfindungsgemäßen Schutzschicht aus Zinn-Zinkoxid nach Beispiel 1 wurde die Trübung sogar um das 89-fache vermindert. Dieses Ergebnis war für den Fachmann unerwartet und überraschend.

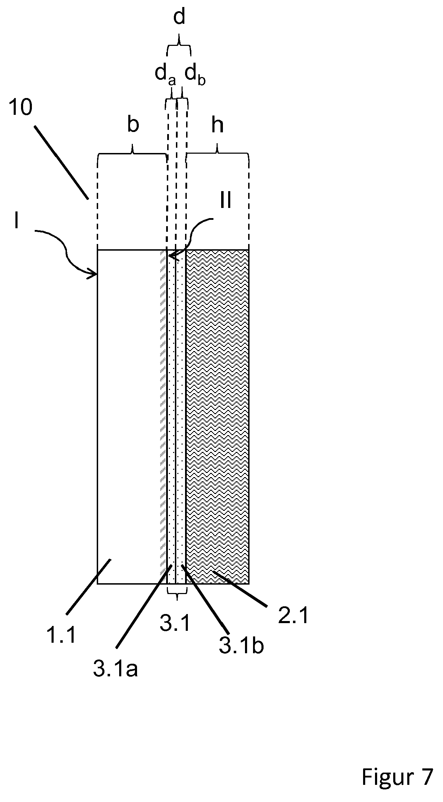

Figur 7 zeigt eine schematische Darstellung eines alternativen Ausführungsbeispiels einer erfindungsgemäßen Brandschutzscheibe 10 in einem Querschnitt. Die Floatglasscheibe 1.1 und die Brandschutzschicht 2.1 sind entsprechend der Figur 1 ausgebildet. Die Schutzschicht 3.1 ist als eine zweilagige Schichtstruktur aus einer ersten (Teil-)Schutzschicht 3.1a und einer zweiten (Teil-)Schutzschicht 3.1b ausgebildet. Die (Teil-)Schutzschicht 3.1a hat eine Dicke dₐ von beispielsweise 8 nm und besteht beispielsweise aus einer Siliziumnitrid-Schicht, und insbesondere aus Si₃N₄. Die (Teil-)Schutzschicht 3.1b hat eine Dicke d_{b} von beispielsweise 15 nm und besteht beispielsweise aus einer Zinn-Zinkoxid-Schicht, wie sie in Figur 1 beschrieben wurde. Die Dicke d der gesamten Schutzschicht 3.1 beträgt somit 23 nm.

Wie Untersuchungen der Erfinder ergaben, konnte bereits mit einer (Teil-) Schutzschicht 3.1a aus Siliziumnitrid die eine Dicke dₐ von 3 nm aufwies, eine vorteilhaft erhöhte Alterungsbeständigkeit und eine stark verringerte Trübung erzielt werden. Gleichzeitig konnte die Dicke der Zinn-Zinkoxid-Schicht reduziert werden ohne die Alterungsbeständigkeit oder Trübung zu verschlechtern.

In diesem Ausgestaltungsbeispiel ist die (Teil-)Schutzschicht 3.1a aus Siliziumnitrid unmittelbar auf der Zinnbadseite II der Floatglasscheibe 1.1 angeordnet und die (Teil-) Schutzschicht 3.1b aus Zinn-Zinkoxid auf der (Teil-)Schutzschicht 3.1a aus Siliziumnitrid angeordnet. Es versteht sich, dass die Reihenfolge der Materialien auch vertauscht sein kann, so dass eine Schicht aus Zinn-Zinkoxid unmittelbar auf der Zinnbadseite der Floatglasscheibe angeordnet ist und eine Schicht aus Siliziumnitrid auf der Schicht aus Zinn-Zinkoxid angeordnet ist.

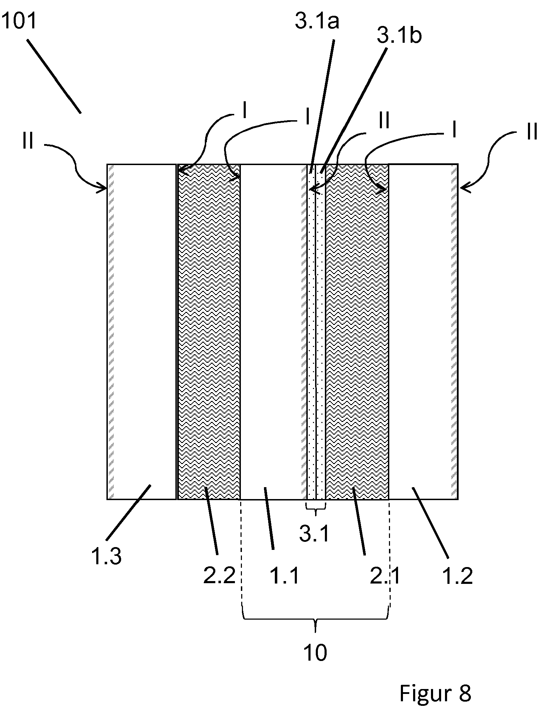

Figur 8 zeigt ein weiteres alternatives Ausführungsbeispiel einer erfindungsgemäßen Brandschutzverglasung 101. Die Brandschutzverglasung 101 aus Figur 8 entspricht der Brandschutzverglasung 101 aus Figur 4b, wobei lediglich die Schutzschicht 3.1 aus Figur 4b als eine doppellagige Schichtstruktur aus einer (Teil-)Schutzschicht 3.1a und einer (Teil-)Schutzschicht 3.1b ausgebildet ist. Die (Teil-)Schutzschichten 3.1a und 3.1 b entsprechen beispielsweise den Schichten aus Figur 7.

In Tabelle 1 sind die Ergebnisse von Alterungstests und Trübungstests für verschiedene Ausführungsbeispiele erfindungsgemäßer Brandschutzscheiben 10 zusammenfassend dargestellt.

**Tabelle 1**

| Schichtmaterial | Schichtdicke(n) | Beständigkeit im Alterungstest | Trübung |
|---|---|---|---|
| Zinn-Zinkoxid (3.1) | 25 nm (3.1) | gut | gering |
| Siliziumnitrid (3.1a)/ | 8nm(3.1a)/ | sehr gut | sehr gering |
| Zinn-Zinkoxid (3.1b) | 15 nm (3.1b) | | |
| Siliziumnitrid (3.1a)/ | 3nm(3.1a)/ | gut | gering |
| Zinn-Zinkoxid (3.1b) | 15 nm (3.1b) | | |
| Zinn-Zinkoxid (3.1a)/ | 15 nm (3.1a)/ | sehr gut | sehr gering |
| Siliziumnitrid (3.1b) | 8nm(3.1b) | | |

In der ersten Spalte von Tabelle 1 ist das Material der Schutzschicht 3.1 und in der zweiten Spalten deren (Schicht-)Dicke angegeben. Die Schutzschichten 3.1 sind jeweils unmittelbar auf der Floatglasscheibe 1.1 angeordnet. Die Angabe Siliziumnitrid (3.1a)/Zinn-Zinkoxid (3.1b) gibt an, dass die Schutzschicht 3.1 aus einer zweilagigen Schichtstruktur besteht. Dabei ist die zuerst angegebene (Teil-) Schutzschicht 3.1a aus Siliziumnitrid unmittelbar auf der Floatglasscheibe 1.1 angeordnet und die zweite (Teil-) Schutzschicht 3.1 b aus Zinn-Zinkoxid unmittelbar auf der ersten (Teil)-Schutzschicht 3.1a angeordnet. Für die Schichtfolge Zinn-Zinkoxid (3.1 a)/Siliziumnitrid (3.1 b) gilt entsprechend die umgekehrte Reihenfolge.

Überraschenderweise zeigte die Schichtfolge Siliziumnitrid (3.1a)/Zinn-Zinkoxid (3.1b) mit Schichtdicken von 3 nm für die erste (Teil-)Schutzschicht 3.1a und 15 nm für die zweite (Teil-)Schutzschicht 3.1b eine ähnlich gute Alterungsbeständigkeit und eine geringe Trübung wie eine einlagige Schutzschicht 3.1 aus 25 nm Zinn-Zinkoxid, obwohl die Gesamtschichtdicke von 25 nm auf 18 nm verringert werden konnte. Für Schichtdickenkombinationen von 8 nm für Siliziumnitrid und 15 nm für Zinn-Zinkoxid ergaben die Experimente sogar eine erhöhte Alterungsbeständigkeit und eine geringere Trübung als bei einer einlagigen Schutzschicht 3.1 aus 25 nm Zinn-Zinkoxid.

Wie umfangreiche Versuche der Erfinder ergaben, ist die Kombination einer Schicht aus einem Metallnitrid, wie Siliziumnitrid, und einer Schicht aus einem Metalloxid, wie Zink-Zinnoxid, besonders vorteilhaft, um eine alterungsbeständige Brandschutzverglasung herzustellen und eine Trübung der Zinnbadseite einer Floatglasscheibe beim Kontakt mit einer alkalischen Brandschutzschicht zu verhindern.

Dieses Ergebnis war für den Fachmann unerwartet und überraschend.

### Bezugszeichenliste

- 1,1.1,1.2,1.3: Floatglasscheibe
- 2,2.1,2.2: Brandschutzschicht
- 3,3.1,3.2,3.3: Schutzschicht
- 3.1 a,3.1 b: (Teil-)Schutzschicht, Schutzschicht, Schicht,
- 4: Haftverminderungsschicht
- 10,10.1,11: Brandschutzscheibe
- 100,101: Brandschutzverglasung

- I: Atmosphärenseite einer Floatglasscheibe
- II: Zinnbadseite einer Floatglasscheibe

- b: Dicke einer Floatglasscheibe
- d,dₐ,d_{b}: Dicke einer Schutzschicht
- h: Dicke einer Brandschutzschicht

## Patentansprüche

1. Brandschutzscheibe (10), umfassend:
- mindestens eine Floatglasscheibe (1.1) mit einer Zinnbadseite (II),
- mindestens eine Schutzschicht (3.1), die auf der Zinnbadseite (II) flächig angeordnet ist und
- mindestens eine Brandschutzschicht (2.1), die auf der Schutzschicht (3.1) flächig angeordnet ist,
wobei die Schutzschicht (3.1) Metalloxid, Metallnitrid, Metallsilizid und/oder Gemische oder Schichtverbindungen davon enthält, und
wobei die Schutzschicht (3.1) eine mehrlagige Schichtstruktur ist und eine (Teil-)Schutzschicht (3.1a) aus einem Metallnitrid und eine (Teil-)Schutzschicht (3.1b) aus einem Metalloxid enthält oder daraus besteht.

2. Brandschutzscheibe (10) nach Anspruch 1, wobei die Brandschutzschicht (2.1) alkalisch ist.

3. Brandschutzscheibe (10) nach Anspruch 1 oder 2, wobei die Brandschutzschicht (2.1) Alkalisilikat, Alkaliphosphat, Alkaliwolframat, Alkalimolydat und/oder Gemische oder Schichtverbindungen davon, bevorzugt Alkali-Polysilikat, Alkali-Polyphosphat, Alkali-Polywolframat, Alkali-Poylmolydat und/oder Gemische oder Schichtverbindungen davon, enthält und das AlkaliElement bevorzugt Natrium, Kalium, Lithium und/oder Gemische davon ist.

4. Brandschutzscheibe (10) nach Anspruch 1 oder 2, wobei die Brandschutzschicht (2.1) ein Hydrogel aus vernetzten Monomeren und/oder Polymeren, bevorzugt Polyacrylamid, Poly-N-Methyloacrylamid oder polymerisiertes 2-Hydroxy-3-methacryloxypropyltrimethylammonium-chlorid, enthält.

5. Brandschutzscheibe (10) nach einem der Ansprüche 1 bis 4, wobei die Schutzschicht (3.1) Zinnoxid, Zinkoxid, Zinn-Zinkoxid, Indium-Zinnoxid (ITO), Titanoxid, Siliziumnitrid, Wolframsilizid und/oder Titansilizid enthält.

6. Brandschutzscheibe (10) nach Anspruch 5, wobei die Schutzschicht (3.1) ZinnZinkoxid enthält und das Verhältnis von Zink:Zinn von 5 Gew.-% : 95 Gew.-% bis 95 Gew.-% :5 Gew.-% und bevorzugt von 15 Gew.-% : 85 Gew.-% bis 70 Gew.-% : 30 Gew.-% beträgt.

7. Brandschutzscheibe (10) nach Anspruch 5 oder 6, wobei die Schutzschicht (3.1) mindestens ein Dotierelement, bevorzugt Antimon, Fluor, Silber, Ruthenium, Palladium, Aluminium und Tantal enthält und der Anteil des Dotierelements an dem metallischen Anteil der Schutzschicht bevorzugt von 0 Gew.-% bis 10 Gew.-% und besonders bevorzugt von 1 Gew.-% bis 5 Gew.% beträgt.

8. Brandschutzscheibe (10) nach einem der Ansprüche 1 bis 7, wobei die mehrlagige Schutzschicht (3.1) eine zweilagige Schichtstruktur ist und eine (Teil-)Schutzschicht (3.1a) aus Siliziumnitrid, und eine (Teil-)Schutzschicht (3.1b) aus einem Zinn-Zinkoxid oder einem dotierten ZinnZinkoxid enthält oder daraus besteht.

9. Brandschutzscheibe (10) nach einem der Ansprüche 1 bis 8, wobei zwischen der Schutzschicht (3.1) und der Brandschutzschicht (2.1) mindestens eine Haftverbesserungsschicht oder eine Haftverminderungsschicht (4) angeordnet ist, die bevorzugt mindestens ein organofunktionelles Silan oder mindestens ein Polymer-Wachs, besonders bevorzugt ein Polymer-Wachs auf der Basis von Polyethylen, enthält.

10. Brandschutzverglasung (100,101) mindestens umfassend:
- eine Brandschutzscheibe (10) nach einem der Ansprüche 1 bis 9 und
- eine Floatglasscheibe (1.2) mit einer Atmosphärenseite (I) und einer Zinnbadseite (II),
wobei
- die Atmosphärenseite (I) oder
- die Zinnbadseite (II) über eine Schutzschicht (3.2), mit der Brandschutzschicht (2.1) der Brandschutzscheibe (10) flächig verbunden ist.

11. Brandschutzverglasung (101) nach Anspruch 10, wobei die Atmosphärenseite (I) der Floatglasscheibe (1.1) der Brandschutzscheibe (10) flächig mit einer Brandschutzschicht (2.2) verbunden ist und die Brandschutzschicht (2.2) mit der Atmosphärenseite (I) oder über eine weitere Schutzschicht (3.3) mit der Zinnbadseite (II) einer dritten Floatglasscheibe (1.3) flächig verbunden ist.

12. Brandschutzverglasung (101) nach Anspruch 10 oder 11, wobei die Floatglasscheibe (1.1) oder die Floatglasscheibe (1.2) mit mindestens einer Stapelfolge aus einer weiteren Brandschutzschicht (2.2) und einer weiteren Floatglasscheibe (1.3) flächig verbunden ist, wobei zwischen jeder Zinnbadseite (II) und einer unmittelbar benachbart angeordneten Brandschutzschicht (2.2), eine weitere erfindungsgemäße Schutzschicht (3.2) angeordnet ist.

13. Verfahren zur Herstellung einer Brandschutzverglasung (100,101), wobei mindestens:
a. eine Schutzschicht (3.1) auf der Zinnbadseite (II) einer Floatglasscheibe (1.1) aufgebracht wird,
b. die Floatglasscheibe (1.1) und eine zweite Floatglasscheibe (1.2) thermisch vorgespannt oder teilvorgespannt werden,
c. die Floatglasscheibe (1.1) und die zweite Floatglasscheibe (1.2) auf einen festen Abstand gehalten werden, so dass sich ein Formhohlraum zwischen der Zinnbadseite (II) der Floatglasscheibe (1.1) und der zweiten Floatglasscheibe (1.2) ausbildet und
d. eine Brandschutzschicht (2.1) in den Formhohlraum eingegossen und ausgehärtet wird
wobei die Schutzschicht (3.1) eine mehrlagige Schichtstruktur ist und eine (Teil-)Schutzschicht (3.1a) aus einem Metallnitrid und eine (Teil-)Schutzschicht (3.1b) aus einem Metalloxid enthält oder daraus besteht.

14. Verfahren nach Anspruch 16, wobei die Verfahrensschritte mindestens einmal mit einer weiteren Floatglasscheibe (1.3) und einer weiteren Brandschutzschicht (2.2) wiederholt werden.

15. Verwendung einer Schutzschicht (3.1) zwischen einer Zinnbadseite (II) einer Floatglasscheibe (1.1) und einer Brandschutzschicht (2.1) nach einem der Ansprüche 1 bis 9 zur Verminderung der Trübung der Floatglasscheibe (1.1) bei Alterung
wobei die Schutzschicht (3.1) eine mehrlagige Schichtstruktur ist und eine (Teil-)Schutzschicht (3.1a) aus einem Metallnitrid und eine (Teil-)Schutzschicht (3.1b) aus einem Metalloxid enthält oder daraus besteht.

## Claims

1. Fire-resistant pane (10), comprising:
- at least one float glass pane (1.1) with a tin bath side (II),
- at least one protective layer (3.1) that is arranged on the tin bath side (II) in a planar manner, and
- at least one fire-resistant layer (2.1) that is arranged on the protective layer (3.1) in a planar manner,
wherein the protective layer (3.1) contains metal oxide, metal nitride, metal silicide, and/or mixtures or layered compounds thereof,
wherein the protective layer (3.1) is a multilayer structure and a protective (sub)layer (3.1 a) comprises or consists of a metal nitride and a protective (sub)layer (3.1 b) comprises or consists of a metal oxide.

2. Fire-resistant pane (10) according to claim 1, wherein the fire-resistant layer (2.1) is alkaline.

3. Fire-resistant pane (10) according to claim 1 or 2, wherein the fire-resistant layer (2.1) contains alkali silicate, alkali phosphate, alkali tungstate, alkali molybdate, and/or mixtures or layered compounds thereof, preferably alkali polysilicate, alkali polyphosphate, alkali polytungstate, alkali polymolybdate, and/or mixtures or layered compounds thereof, and wherein the alkali element is preferably sodium, potassium, lithium, and/or mixtures thereof.

4. Fire-resistant pane (10) according to claim 1 or 2, wherein the fire-resistant layer (2.1) contains a hydrogel of cross-linked monomers and/or polymers, preferably polyacrylamide, poly-N-methylolacrylamide, or polymerized 2-hydroxy-3-methacryloxypropyltrimethylammonium chloride.

5. Fire-resistant pane (10) according to one of claims 1 to 4, wherein the protective layer (3.1) contains tin oxide, zinc oxide, tin-zinc oxide, indium-tin oxide (ITO), titanium oxide, silicon nitride, tungsten silicide, and/or titanium silicide.

6. Fire-resistant pane (10) according to claim 5, wherein the protective layer (3.1) contains tin-zinc oxide and wherein a ratio of zinc: tin ranges from 5 wt.% : 95 wt.% to 95 wt.% :5 wt.% and preferably from 15 wt.% : 85 wt.% to 70 wt.% : 30 wt.%.

7. Fire-resistant pane (10) according to claim 5 or 6, wherein the protective layer (3.1) contains at least one dopant, preferably antimony, fluorine, silver, ruthenium, palladium, aluminum, and tantalum and the fraction of the dopant in the metal fraction of the protective layer is preferably from 0 wt.-% to 10 wt.-% and particularly preferably from 1 wt.-% to 5 wt.-%.

8. Fire-resistant pane (10) according to one of claims 1 to 7, wherein the multilayer protective layer (3.1) is a two-ply layer structure and wherein one protection (sub)layer (3.1a) contains or is made of silicon nitride, and one protection (sub)layer (3.1b) contains or is made of a tin-zinc oxide or a doped tin-zinc oxide.

9. Fire-resistant pane (10) according to one of claims 1 to 8, wherein at least one adhesion-improving layer or one adhesion-reducing layer (4), which preferably contains at least one organofunctional silane or at least one polymer¬wax, particularly preferably a polymer-wax based on polyethylene, is arranged between the protective layer (3.1) and the fire-resistant layer (2.1).

10. Fire-resistant glazing assembly (100,101) comprising at least:
- one fire-resistant pane (10) according to one of claims 1 to 9 and
- one float glass pane (1.2) with an atmosphere side (I) and a tin bath side (II),
wherein
- - the atmosphere side (I) or
- - the tin bath side (II), via a protective layer (3.2),
is bonded to the fire-resistant layer (2.1) of the fire-resistant pane (10) in a planar manner.

11. Fire-resistant glazing assembly (101) according to claim 10, wherein the atmosphere side (I) of the float glass pane (1.1) of the fire-resistant pane (10) is bonded to a fire-resistant layer (2.2) in a planar manner and the fire-resistant layer (2.2) is bonded in a planar manner to the atmosphere side (I) or via another protective layer (3.3) to the tin bath side (II) of a third float glass pane (1.3).

12. Fire-resistant glazing assembly (101) according to claim 10 or 11, wherein the float glass pane (1.1) or the float glass pane (1.2) is bonded across at least one stack sequence of another fire-resistant layer (2.2) and another float glass pane (1.3), wherein another protective layer (3.2) according to the invention is arranged between each tin bath side (II) and a fire-resistant layer (2.2) arranged immediately adjacent to the tin bath side (II).

13. Method for producing a fire-resistant glazing assembly (100,101), wherein at least:
a) one protective layer (3.1) is applied on the tin bath side (II) of a float glass pane (1.1),
b) the float glass pane (1.1) and a second float glass pane (1.2) are thermally tempered or partially tempered,
c) the float glass pane (1.1) and the second float glass pane (1.2) are held at a fixed distance from each other, such that a cavity is formed between the tin bath side (II) of the float glass pane (1.1) and the second float glass pane (1.2), and
d) a fire-resistant layer (2.1) is poured into the cavity and hardened.
wherein the protective layer (3.1) is a multilayer and a protective (sub)layer (3.1 a) comprises or consists of a metal nitride and a protective (sub)layer (3.1b) comprises or consists of a metal oxide.

14. Method according to claim 13, wherein the process steps are repeated at least one time with another float glass pane (1.3) and another fire-resistant layer (2.2).

15. Use of a protective layer (3.1) between a tin bath side (II) of a float glass pane (1.1) and a fire-resistant layer (2.1) according to one of claims 1 to 12 to reduce the clouding of the float glass pane (1.1) due to aging.
wherein the protective layer (3.1) is a multilayer and a protective (sub)layer (3.1a) comprises or consists of a metal nitride and a protective (sub)layer (3.1b) comprises or consists of a metal oxide.

## Revendications

1. Vitre de protection (10) contre l'incendie comprenant :
- au moins une vitre (1.1) en verre flotté présentant un côté (II) de bain d'étain,
- au moins une couche de protection (3.1) qui est disposée sur toute la surface du côté (II) de bain d'étain et
- au moins une couche de protection (2.1) contre l'incendie qui est disposée sur toute la surface de la couche de protection (3.1),
la couche de protection (3.1) contenant un oxyde métallique, un nitrure métallique, un siliciure métallique et/ou des mélanges ou des composés à couches de ceux-ci et
la couche de protection (3.1) étant une structure multicouche et contenant ou étant constituée par une couche de protection (partielle) (3.1a) en un nitrure métallique et une couche de protection (partielle) (3.1b) en un oxyde métallique.

2. Vitre de protection (10) contre l'incendie selon la revendication 1, la couche de protection (2.1) contre l'incendie étant alcaline.

3. Vitre de protection (10) contre l'incendie selon la revendication 1 ou 2, la couche de protection (2.1) contre l'incendie contenant un silicate de métal alcalin, un phosphate de métal alcalin, un tungsténate de métal alcalin, un molybdate de métal alcalin et/ou des mélanges ou des composés à couches de ceux-ci, de préférence un polysilicate de métal alcalin, un polyphosphate de métal alcalin, un polytungsténate de métal alcalin, un polymolybdate de métal alcalin et/ou des mélanges ou des composés à couches de ceux-ci et l'élément de métal alcalin étant de préférence le sodium, le potassium, le lithium et/ou des mélanges de ceux-ci.

4. Vitre de protection (10) contre l'incendie selon la revendication 1 ou 2, la couche de protection (2.1) contre l'incendie contenant un hydrogel de monomères réticulés et/ou de polymères, de préférence de polyacrylamide, de poly-N-méthylolacrylamide ou de chlorure de 2-hydroxy-3-méthacryloxypropyltriméthylammonium polymérisé.

5. Vitre de protection (10) contre l'incendie selon l'une quelconque des revendications 1 à 4, la couche de protection (3.1) contenant de l'oxyde d'étain, de l'oxyde de zinc, de l'oxyde d'étain-zinc, de l'oxyde d'indium-étain (ITO), de l'oxyde de titane, du nitrure de silicium, du siliciure de tungstène et/ou du siliciure de titane.

6. Vitre de protection (10) contre l'incendie selon la revendication 5, la couche de protection (3.1) contenant de l'oxyde d'étain-zinc et le rapport de zinc:étain étant de 5% en poids: 95% en poids à 95% en poids:5% en poids et de préférence de 15% en poids:85% en poids à 70% en poids:30% en poids.

7. Vitre de protection (10) contre l'incendie selon la revendication 5 ou 6, la couche de protection (3.1) contenant au moins un élément de dopage, de préférence l'antimoine, le fluor, l'argent, le ruthénium, le palladium, l'aluminium et le tantale et la proportion de l'élément de dopage par rapport à la proportion métallique de la couche de protection étant de préférence de 0% en poids à 10% en poids et de manière particulièrement préférée de 1% en poids à 5% en poids.

8. Vitre de protection (10) contre l'incendie selon l'une quelconque des revendications 1 à 7, la couche de protection (3.1) multicouche étant une structure bicouche et contenant ou étant constituée par une couche de protection (partielle) (3.1a) en nitrure de silicium et une couche de protection (partielle) (3.1b) en un oxyde d'étain-zinc ou en un oxyde d'étain-zinc dopé.

9. Vitre de protection (10) contre l'incendie selon l'une quelconque des revendications 1 à 8, au moins une couche d'amélioration de l'adhérence ou une couche de diminution de l'adhérence (4), qui contient de préférence au moins un silane organofonctionnel ou au moins une cire de polymère, de manière particulièrement préférée une cire de polymère à base de polyéthylène, étant disposée entre la couche de protection (3.1) et la couche de protection (2.1) contre l'incendie.

10. Vitrage de protection (100,101) contre l'incendie, comprenant au moins :
- une vitre de protection (10) contre l'incendie selon l'une quelconque des revendications 1 à 9 et
- une vitre (1.2) en verre flotté présentant un côté (I) atmosphère et un côté (II) de bain d'étain,
- le côté (I) atmosphère ou
- le côté (II) de bain d'étain étant relié sur toute la surface via une couche de protection (3.2) à la couche de protection (2.1) contre l'incendie de la vitre de protection (10) contre l'incendie.

11. Vitrage de protection (101) contre l'incendie selon la revendication 10, le côté (I) atmosphère de la vitre (1.1) en verre flotté de la vitre de protection (10) contre l'incendie étant relié sur toute la surface à une couche de protection (2.2) contre l'incendie et la couche de protection (2.2) contre l'incendie étant reliée sur toute la surface au côté (I) atmosphère ou via une autre couche de protection (3.3) au côté (II) de bain d'étain d'une troisième vitre (1.3) en verre flotté.

12. Vitrage de protection (101) contre l'incendie selon la revendication 10 ou 11, la vitre (1.1) en verre flotté ou la vitre (1.2) en verre flotté étant reliée sur toute la surface à au moins une pile constituée par une autre couche de protection (2.2) contre l'incendie et une autre vitre (1.3) en verre flotté, une autre couche de protection (3.2) selon l'invention étant disposée entre chaque côté (II) de bain d'étain et une couche de protection (2.2) contre l'incendie disposée de manière immédiatement adjacente.

13. Procédé pour la fabrication d'un vitrage de protection (100,101) contre l'incendie, dans lequel, au moins :
a. une couche de protection (3.1) est appliquée sur le côté (II) de bain d'étain d'une vitre (1.1) en verre flotté,
b. la vitre (1.1) en verre flotté et une deuxième vitre (1.2) en verre flotté étant thermiquement précontraintes ou partiellement précontraintes,
c. la vitre (1.1) en verre flotté et la deuxième vitre (1.2) en verre flotté étant maintenues à une distance fixe de telle sorte qu'il se forme un espace creux de moulage entre le côté (II) de bain d'étain de la vitre (1.1) en verre flotté et la deuxième vitre (1.2) en verre flotté
d. une couche de protection (2.1) contre l'incendie étant coulée et durcie dans l'espace creux de moulage,
la couche de protection (3.1) étant une structure multicouche et contenant ou étant constituée par une couche de protection (partielle) (3.1a) en un nitrure métallique et une couche de protection (partielle) (3.1b) en un oxyde métallique.

14. Procédé selon la revendication 16, les étapes de procédé étant répétées au moins une fois avec une autre vitre (1.3) en verre flotté et une autre couche de protection (2.2) contre l'incendie.

15. Utilisation d'une couche de protection (3.1) entre un côté (II) de bain d'étain d'une vitre (1.1) en verre flotté et une couche de protection (2.1) contre l'incendie selon l'une quelconque des revendications 1 à 9 pour la diminution du trouble de la vitre (1.1) en verre flotté lors du vieillissement, la couche de protection (3.1) étant une structure multicouche et contenant ou étant constituée par une couche de protection (partielle) (3.1a) en un nitrure métallique et une couche de protection (partielle) (3.1b) en un oxyde métallique.
